(19) **Europäisches Patentamt**
**European Patent Office**
**Office européen des brevets**

(11) **EP 1 178 332 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(51) Int Cl.:
*G01S 13/48* *(2006.01)*    *G01S 13/524* *(2006.01)*
*H01Q 3/22* *(2006.01)*

(21) Anmeldenummer: **00116587.7**

(22) Anmeldetag: **01.08.2000**

(54) **Verfahren und Einrichtung für ein multiples Radar**

Multibeam Radar System and method of operating such a system

Système radar multifaisceaux et méthode de fonctionnement dudit système

(84) Benannte Vertragsstaaten:
**DE FR GB IT**

(43) Veröffentlichungstag der Anmeldung:
**06.02.2002 Patentblatt 2002/06**

(73) Patentinhaber: **EADS Deutschland GmbH**
**85521 Ottobrunn (DE)**

(72) Erfinder: **Ender, Joachim, Dr.**
**53343 Wachtberg (DE)**

(74) Vertreter: **Meel, Thomas**
**Patentassessor**
**c/o EADS Deutschland GmbH**
**Patentabteilung FCL6**
**88039 Friedrichshafen (DE)**

(56) Entgegenhaltungen:
**EP-B- 0 132 378**          **DE-A- 19 906 149**

- **KLEMM R ET AL: "TWO-DIMENSIONAL FILTERS FOR RADAR AND SONAR APPLICATIONS" PROCEEDINGS OF THE EUROPEAN SIGNAL PROCESSING CONFERENCE,NL,AMSTERDAM, ELSEVIER, Bd. CONF. 5, 18. September 1990 (1990-09-18), Seiten 2023-2026, XP000365956**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Verfahren und eine Einrichtung für ein multiples Radar gemäß dem Oberbegriff der Ansprüche 1 und 4.

Radar-Aufklärungssysteme, vornehmlich gilt dies für luft- und raumgetragene Systeme, setzen einen MTI-Modus (MTI = moving target indication) zur Entdeckung, Ortung und Verfolgung bewegter Ziele am Boden und in der Luft ein, der auf der Auswertung des Doppler-Effekts beruht [1].

Die Bewegtzielerkennung erfolgt dabei durch die Aussendung eines Pulszuges mit einer bestimmten Puls-Wiederholfrequenz PRF (pulse repetition frequency) und einer Auswertung der Echos hinsichtlich der sich durch den Dopplereffekt ergebenden Phasendrehung von Puls zu Puls.

Das Verfahren wird erheblich durch die konkurrierenden Festzielechos vom Boden ("Clutter"), die infolge der Plattformbewegung ebenfalls Dopplerverschiebungen aufweisen, behindert. Die Trennung solcher Clutter-Echos von Bewegtzielechos kann mit Hilfe der adaptiven Raum-Zeit-Verarbeitung (STAP = space-time adaptive processing) vollzogen werden, wenn empfangsseitig mehrere Sensoren oder Subaperturen mit parallelen Empfangskanälen vorhanden sind [2]. Das STAP-Verfahren ist im Anhang im einzelnen beschrieben.

Moderne Aufklärungs-Radare sind mit phasengesteuerten Gruppenantennen *("phased arrays")* ausgestattet, bei denen die jeweilige Blickrichtung mittels Phasenschiebern vollständig elektronisch eingestellt wird, so dass eine Abtastung des Raumes durch das trägheitslose Schwenken der Antennenkeule ohne mechanische Vorrichtungen erzielt werden kann [3].

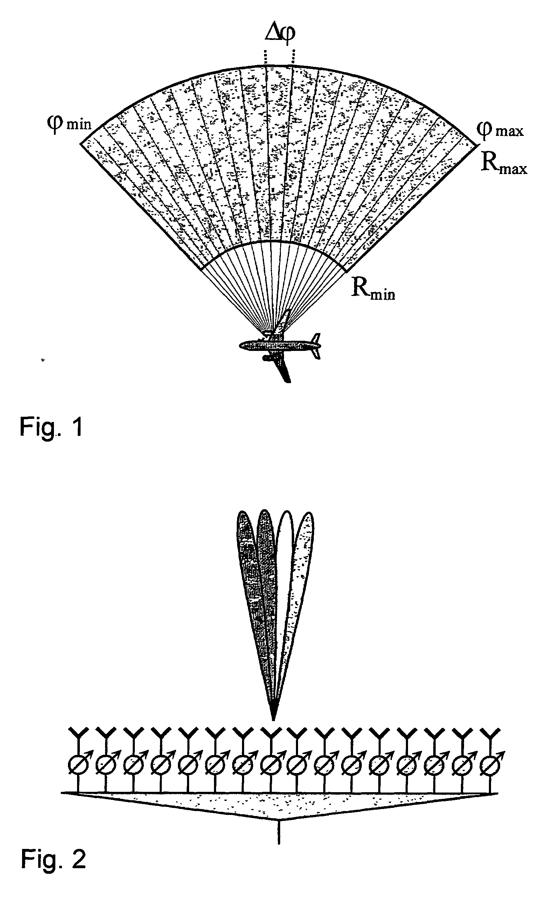

Ein Suchbereich (siehe Figur 1) besteht dabei aus einem Kreissektor, der im Azimutwinkel durch die Werte $\varphi_{min}$ und $\varphi_{max}$ begrenzt wird, in der Entfernung durch $R_{min}$ und $R_{max}$. Dieser Bereich wird bisher in der Weise abgesucht, dass die Gruppenantenne auf eine feste Richtung eingestellt wird; es wird ein Puls der Bandbreite $\Delta f$ ausgesendet, danach wird die Antenne auf Empfang gestellt, die Echos werden abgetastet und der Signalverarbeitung zugeführt. Das Empfangstor muss so lange geöffnet bleiben, bis die Echos aus der maximalen Entfernung vollständig eingetroffen sind. Erst dann kann ein neuer Puls ausgesendet werden, so dass die PRF durch diese Bedingung nach oben begrenzt ist.

Auf diese Weise werden in die eingestellte Richtung $N_p$ Pulse ausgesendet, deren Echos gemeinsam zur Bewegtzielentdeckung herangezogen werden. Für die Raum-Zeit-Filterung zur Trennung vom Clutterhintergrund ist dabei eine gewisse Minimalzahl von Pulsen in dieselbe Richtung erforderlich.

Ist der Vorgang für eine Richtung abgeschlossen, so wird die Blickrichtung der Antenne um ein Azimutraster $\Delta\varphi$ weitergeschaltet und so fort, bis der ganze Winkelbereich abgedeckt ist.

Der Zeitbedarf für die Bearbeitung einer Richtung kann zu lange dauern, einerseits aus dem Grunde, dass eine gewünschte Suchleistung in Quadratkilometern pro Sekunde nicht erbracht wird, andererseits, weil die Zeit zwischen zwei Meldungen desselben Ziels zu groß ist, um eine Spurverfolgung zu garantieren. Das Zeitproblem wird um so gravierender, je größer die Maximalentfernung gewählt wird und je schmaler die Antennenkeule gestaltet wird.

Aus der EP 0 132 378 B1 ist ein multibeames Radar bekannt, welches sich aufgrund folgenden Sachverhaltes von der Erfindung unterscheidet: Es arbeitet nicht mit dem STAP- Verfahren zur Entdeckung bewegter Ziele, so dass langsam bewegte und schwach reflektierende Ziele nur mit geringer Wahrscheinlichkeit zu entdecken sind. Es ist in der neuen Erfindung von einem STAP-Radar mit den bekannten Vorteilen ausgegangen worden. Die vorgeschlagene Konfiguration verbindet gerade die Ausgangssituation von STAP, nämlich der Verfügbarkeit mehrerer Subaperturen im Empfangsfall, mit einer Multifrequenz-Multibeam Strategie zur Erniedrigung der Suchzeit und stellt damit ein vom EP 0 132 378 B1 wohl unterschiedenes Verfahren dar.

Der Erfindung liegt die Aufgabe zugrunde, die Suchleistung eines MIT-Systems wesentlich zu steigern.

Diese Aufgabe wird mit der Einrichtung nach Anspruch 4 gelöst, die gemäß dem Verfahren nach Anspruch 1 funktioniert. Die Ansprüche 2 und 3 bilden den Erfindungsgegenstand vorteilhaft weiter aus.

Das erfinderische Verfahren zeichnet sich dadurch aus, dass K direkt nacheinander gebildete Sendekeulen bei K verschiedenen Frequenzen in K Richtungen derart verschachtelt werden, dass ohne Verlust an Signal-zu-Rausch-Verhältnis die Zeit zur Abdeckung eines abzusuchenden Gebietes erheblich reduziert wird, so dass der Einsatz starrer phasengesteuerter Gruppenantennen (Phased-Array-Antennen) möglich wird.

Erreicht wird die Anwendbarkeit dadurch, dass nach dem Aussenden von K Sendekeulen das Radar auf Empfang geschaltet wird und die Echos in den K Kanälen abgetastet werden. Der Vorgang wird für einen gesamten Pulszug N mal wiederholt. Durch eine erfindungsspezifische Signalverarbeitung können die Frequenzen und Richtungen wieder entflochten werden. Der Faktor K ist größer oder gleich 2 zu wählen. Er hängt einerseits von dem vertretbaren technischen Aufwand ab, andererseits von der zulässigen Totzeit während der Sendephase, die die Minimalentfernung $R_{min}$ (siehe Fig. 1) bestimmt.

Mit dem erfindungsgemäßen Verfahren kann die Suchleistung eines Phased-Array MTI-Systemes mit mehreren Untergruppen wesentlich gesteigert werden kann.

Mit der Erfindung kann die multiple Radartechnik so verbessert werden, dass sie zukünftig auch im Bereich der Radare mit synthetischer Apertur angewendet werden kann.

Ein besonderes Ausführungsbeispiel der Erfindung wird nachfolgend anhand der Figuren 1 bis 8 näher erläutert. Sie beziehen sich auf den Wert K=4. Es zeigen:

Fig. 1 einen schematisierten Suchbereich für ein MTI-Radar,
Fig. 2 den Sendevorgang für K Keulen bei K Frequenzbändern,
Fig. 3 die Keulenbildung während des Empfangs,
Fig. 4 eine zeitliche Abfolge des Sendebetriebes,
Fig. 5 den ersten Schritt der Verarbeitung der empfangenen Signale,
Fig. 6 die STAP-Verarbeitung eines Entfernungsringes für eine Keule,
Fig. 7 die zeitlichen Bedingungen für entfernungseindeutige Abtastung beim STAP-Verfahren,
Fig. 8 die Raum-Zeit-Filterung gemäß STAP-Verfahren.

Wie die Figur 1 zeigt, besteht ein Suchbereich aus einem Kreissektor, der im Azimutwinkel durch die Werte $\varphi_{min}$ und $\varphi_{max}$ begrenzt wird, in der Entfernung durch $R_{min}$ und $R_{max}$. Dieser Bereich ist vom Radar abzusuchen.

Die Phasenschieber der phasengesteuerten Gruppenantenne werden dazu für eine erste Richtung $\varphi_1$ eingestellt, es folgt die Aussendung eines Pulses der Länge $\Delta t$ und der Bandbreite $\Delta f$ bei einer Mittenfrequenz $f_1$. Der Sendepuls kann z. B. ein linear frequenzmoduliertes Signal ("Chirp") sein. Direkt anschließend werden die Phasenschieber zur Aussendung eines nächsten Pulses mit der Länge $\Delta t$, der Bandbreite $\Delta f$ und mit der Mittenfrequenz $f_2$ in die Richtung $\varphi_2$ eingestellt. Der Sendevorgang wird entsprechend bis zur K-ten Richtung fortgesetzt.

Die benötigten Frequenzbänder dürfen sich dabei nicht überschneiden (dies ist aus der Figur 2 erkennbar). Für den Sendevorgang muss der Sender in der Zeitspanne $K\Delta t$ eingeschaltet sein, das insgesamt benötigte Frequenzband beträgt $K\Delta f$, der abgedeckte Winkelbereich $K\Delta\varphi$.

Figur 2 zeigt die Struktur der phasengesteuerten Gruppenantenne in Flugrichtung. Die Anordnung in der zweiten Dimension, der Elevation, wurde aus Gründen der Übersichtlichkeit weggelassen, d. h. jedes Antennensymbol steht für eine ganze Spalte von Strahlern. Das Sendesignal wird auf die einzelnen Spalten mit einem Mikrowellennetzwerk (graues Dreieck) über die Phasenschieber (kreisförmige Symbole) verteilt. Entsprechend der geforderten momentanen Blickrichtung werden die Phasenschieber auf die nach dem Phased-Array-Prinzip berechnete Phase eingestellt. Die gezeigten K Sendekeulen symbolisieren die jeweiligen Antennendiagramme für die einzelnen Pulse bei den K verschiedenen Frequenzen.

Nach der Sendephase wird die Empfangsphase dadurch eingeleitet, dass die Gruppenantenne auf den Mittelwert der Senderichtungen fokussiert wird. Danach werden die Empfänger eingeschaltet und der Empfangsbereich (Gewinnung digitaler Signale) geöffnet. Die Empfangsbandbreite muss mindestens $K\Delta f$ betragen, ebenso die Abtastrate. Empfangen wird in allen K Kanälen, angeschlossen an die K aneinandergrenzenden Subaperturen. Die Keulenbreite jeder Subapertur beträgt $K\Delta\varphi$, so dass alle Echos der einzelnen Sendekeulen empfangen werden können.

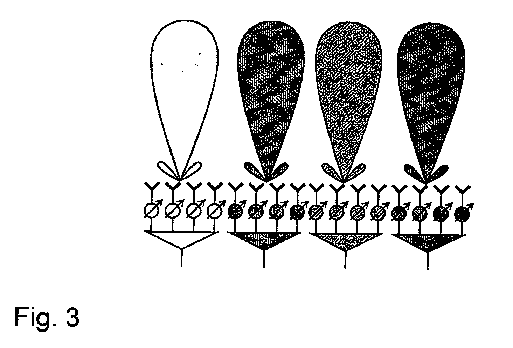

Figur 3 zeigt die Subaperturen mit den um den Faktor K breiteren Empfangskeulen. Jede Subapertur empfängt die Echos jeder der K Sendekeulen.

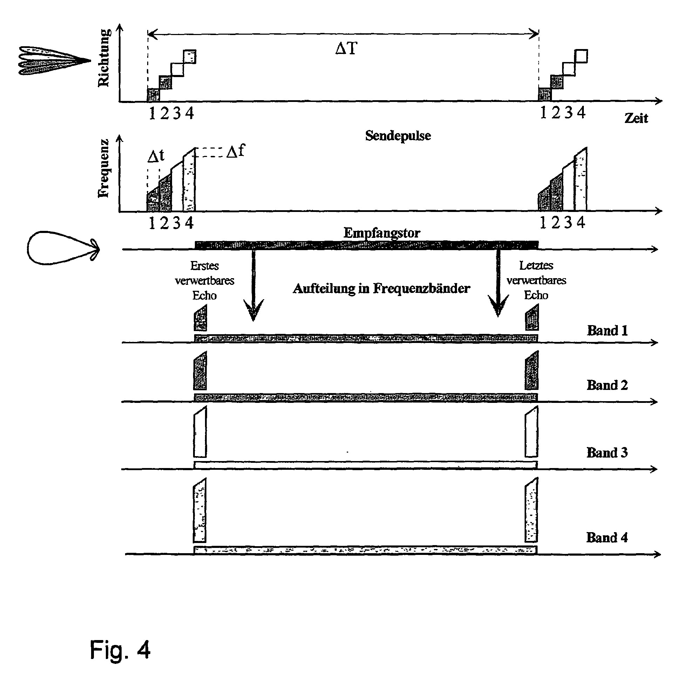

In Figur 4 ist die zeitliche Abfolge in einem Richtungs-Zeit-Diagramm und einem Frequenz-Zeit-Diagramm dargestellt. Die K Einzelpulse werden nacheinander in die K nebeneinanderliegenden Richtungen abgestrahlt. Der Verlauf der Momentanfrequenz zeigt die einzelnen Chirps. Der Vorgang wird nach der Zeit $\Delta T$ wiederholt. Dazwischen kann für einen Zeitraum $\Delta T - K \Delta t$ das Empfangstor geöffnet werden. Die darunter gezeigten Vorgänge nach Empfang beziehen sich auf den nächsten Schritt.

Es folgt eine Speicherung der digitalen Daten. Nachfolgend werden sie einer Fouriertransformation längs der Entfernungsachse unterzogen. Die Echos der einzelnen Sendeimpulse sind nun in nicht überlappenden Frequenzbändern gesammelt und lassen sich damit trennen (siehe Figur 4).

Die Pulskompression bedeutet eine Filterung mit dem auf die ausgesendete Wellenform angepassten Filter (*matched filter*) oder einem modifizierten Filter (*mismatched filter).* In jedem Fall kann die Faltung mit der Filter-Pulsantwort im Frequenzbereich durch eine Multiplikation mit der Übertragungsfunktion ersetzt werden. Da die Daten nach der Fouriertransformation bereits im Frequenzbereich vorliegen, fehlt zur Pulskompression lediglich die Multiplikation mit der Übertragungsfunktion des Filters *(Referenzfunktion)* und die Rücktransformation in den Zeitbereich.

Die Trennung in die einzelnen Frequenzbänder kann nun während der Pulskompression durch Multiplikation mit der jeweiligen Referenzfunktion erfolgen, die ja auf die entsprechenden Frequenzbänder konzentriert sind und im übrigen Bereich jeweils gleich Null gesetzt werden können. Die Rücktransformation in den Zeitbereich erfolgt schließlich durch Anwendung der inversen FFT.

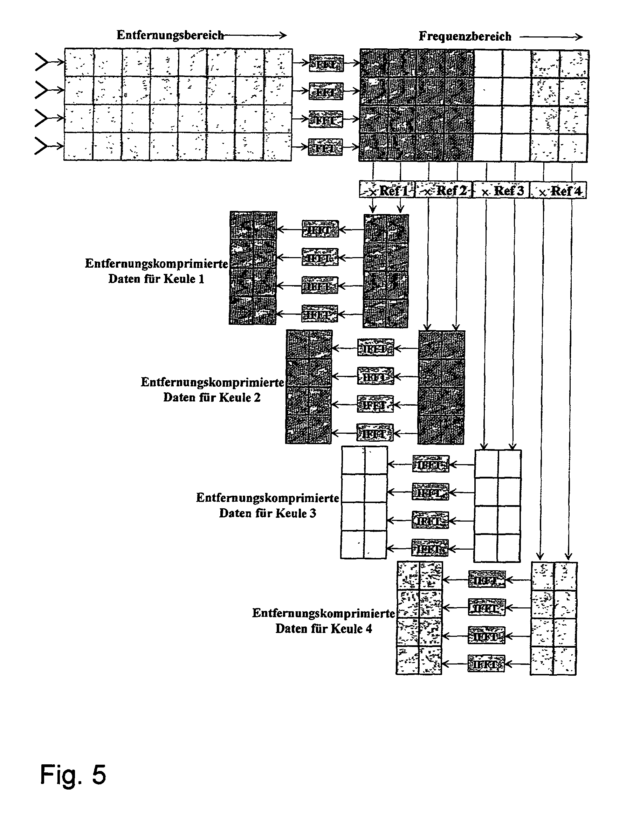

Figur 5 zeigt diesen Vorgang. Dabei ist zu berücksichtigen, dass die Abtastung für den ganzen Frequenzbereich ($K\Delta f$) die K-fache Anzahl von Abtastwerten produziert wie zur Abdeckung des Entfernungsbereiches mit einer Auflösung entsprechend der Bandbreite $\Delta f$ nach dem Nyquist-Kriterium erforderlich. Nach der Fouriertransformation kann der Frequenzbereich daher in K Teilbereiche zerlegt werden (Feld oben rechts), deren Wertezahl der ursprünglichen Forderung entspricht. Die folgenden Operationen (Multiplikation mit der Referenzfunktion, Rücktransformation) können also mit einer um den Faktor K reduzierten Anzahl durchgeführt werden. Alle Operationen geschehen bisher getrennt parallel für die K Empfangskanäle. Es ist zu beachten, dass durch die Trennung im Frequenzbereich gleichzeitig eine Trennung der Richtungen erfolgt ist, da jeder Sendekeule eine bestimmte Frequenz zugeordnet war.

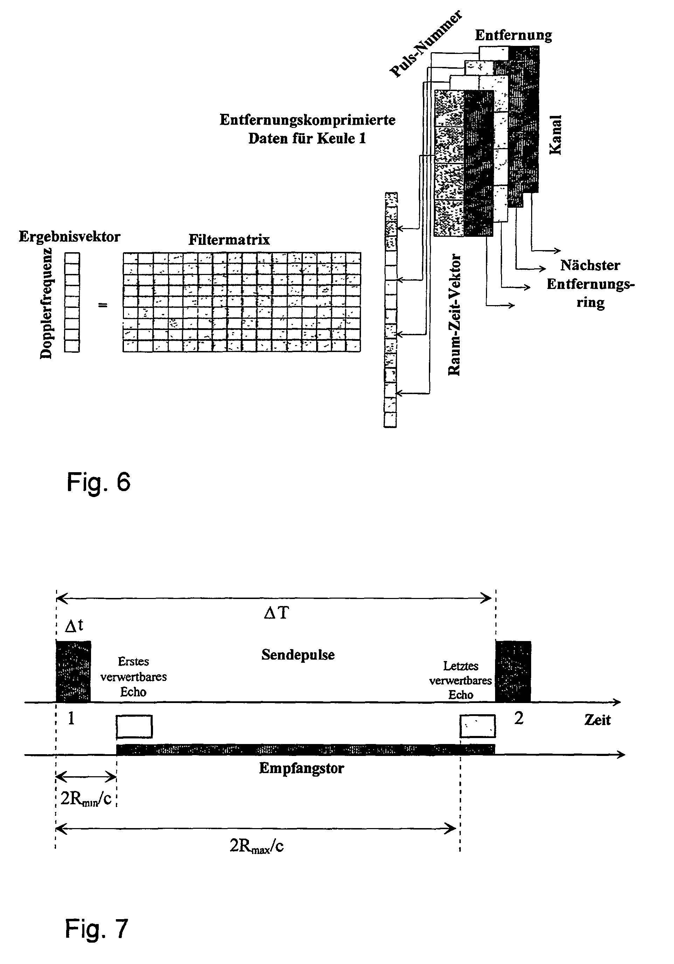

Über mehrere Pulse hinweg, werden die so erhaltenen entfernungskomprimierten Daten gesammelt und separat einer STAP-Verarbeitung unterzogen. Der Vorgang ist in der Figur 6 zur Verdeutlichung dargestellt. Der Ablauf der STAP-Verarbeitung ist im Anhang ausführlich dargestellt. Die Referenzsignale sind dabei an die jeweiligen Keulenrichtungen und an eine Anzahl vorgegebener Dopplerfrequenzen angepasst.

Weil sich bei einem Keulenvielfach ohne Umschalten der Frequenz die Dopplerbandbreite der Clusterechos erhöht und so die Zieldeckung mit dem STAP-Verfahren erschwert ist, kann es vorteilhaft sein, das erfindungsgemäße Verfahren zu modifizieren. Gemäß der Gegenstände der Ansprüche 2 und 3 werden die Sendekeulen nicht direkt hintereinander, sondern in einer wechselnden Reihenfolge oder verschachtelt gesendet. Durch die Änderung der Reihenfolge der ausgesendeten Keulen von Radarperiode zu Radarperiode lässt sich eine nicht-äquidistante Puls-zu-Puls Abtastung herbeiführen, womit sich die Doppler-Mehrdeutigkeit auflösen lässt.

Als weiterer Vorteil stellt sich für die Sende-Empfangs-Module eine Erholungszeit nach dem Senden eines Pulses ein.

Folgende technische Voraussetzungen müssen für die Durchführung des erfindungsgemäßen Verfahrens gegeben sein:

- Die Gruppenantenne muss sendeseitig für eine Momentanbandbreite $\Delta f$ und eine Gesamt-Bandbreite $K\Delta f$ ausgelegt sein. Die Momentanbandbreite wird durch die Anforderung an Entfernungsauflösung bestimmt. So ist für eine übliche Auflösung von 15 Metern eine Bandbreite von etwa 10 MHz erforderlich, so dass mit K=4 die Gesamtbandbreite etwa 40 MHz beträgt. Dieser Wert stellt für eine moderne Gruppenantenne keine besondere Schwierigkeit dar.

- Die Sende-Empfangs-Module müssen in der Lage sein, K Sendepulse der Länge $\Delta t$ unmittelbar hintereinander bei verschiedenen Mittenfrequenzen an die Strahlerelemente abzugeben und zwischen den Pulsen die Senderichtung durch Betätigung der Phasenschieber umzuschalten. Während der üblichen Umschaltzeit der Phasenschieber von etwa 20 - 50 nsec ist eine entsprechende Pause zwischen den Einzelpulsen erlaubt.

- Die Gruppenantenne muss mit K parallelen Empfangskanälen ausgerüstet sein, die an K aneinanderstoßende Subaperturen angeschlossen sind. Eine solche Anordnung ist üblich, wenn mit der Antenne eine Entdeckung auch langsam bewegter Bodenfahrzeuge durchgeführt werden soll.

- Die Empfangsbandbreite muss mindestens gleich $K\Delta f$ sein. Wie oben erläutert, stellt dies für realistische Parameterannahmen kein Problem dar.

- Die Empfangssignale müssen mit einer Frequenz von mindestens $K\Delta f$ abgetastet werden. Auch diese Forderung ist nach dem Stand der Technik ohne weiteres realisierbar.

Im folgenden sollen die das erfindungsgemäße Verfahren betreffenden Randbedingungen ausführlicher dargestellt und quantifiziert werden. Dabei wird unter a) von den Randbedingungen für ein konventionelles Scan-MIT-System mit STAP-Verarbeitung ausgegangen. Weiterhin wird an einem Beispiel der Zeitbedarf für ein vorgegebenes Gebiet mit dem herkömmlichen Verfahren berechnet. Anschließend werden unter b) die Zeitbedingungen für das erfindungsgemäße Verfahren sowie für die gleiche Aufgabe wie unter a) die MTI-Leistung des erfindungsgemäßen Verfahrens angegeben.

**a) Randbedingungen für konventionelles Scan-MIT mit STAP-Verarbeitung**

Die einzelnen Radarparameter, aufgelistet in Tabelle 1, sind durch verschiedene Bedingungen miteinander verbunden:

1. Um eine lückenlose Überdeckung im Winkelbereich zu erreichen, benutzt man ein Abtastraster $\Delta\varphi$, das in der Größenordnung der Keulenbreite $\delta\varphi$ liegt. Folglich benötigt man $N\varphi = (\varphi_{max}-\varphi_{mn})/\Delta\varphi$ Such richtungen.

2. Benutzt man Impulse der Länge $\Delta t$, so ist nach Figur 7 der zeitliche Abstand zwischen zwei Pulsen nach unten begrenzt durch $\Delta T \geq 2*R_{max}/c + \Delta t$, wobei c die Lichtgeschwindigkeit bezeichnet. Umschaltzeiten zwischen Senden und Empfang sowie zwischen zwei Richtungen sind hier und im folgenden nicht berücksichtigt.

3. Die eindeutig durch Doppleranalyse erfassbare Zielgeschwindigkeit ist gegeben durch $V_{max} = \lambda/(4\Delta T)$, so dass die Pulswiederholperiode so klein wie möglich gemacht werden sollte. In der Ungleichung im vorherigen Punkt wird man also möglichst ein Gleichheitszeichen anstreben.

Tabelle 1: Radarparameter und ihre Beziehungen

| Wellenlänge | $\lambda$ | | |
|---|---|---|---|
| Winkelbereich | $\varphi_{min}$ bis $\varphi_{max}$ | | |
| Entfernungsbereich | $R_{min}$ bis $R_{max}$ | | |
| Abgedeckte Fläche | A | = | $\frac{1}{2}(\varphi_{max} - \varphi_{min}) \times (R^2_{max} - R^2_{min})$ |
| Abtastraster im Winkelbereich | $\Delta\varphi$ | | |
| Anzahl Suchrichtungen | $N_\varphi$ | = | $(\varphi_{max} - \varphi_{min})/\Delta\varphi$ |
| Anzahl Pulse pro Richtung | $N_p$ | | |
| Pulswiederholintervall | $\Delta T$ | | |
| Pulswiederholfrequenz | PRF | = | $1/\Delta T$ |
| Zeitbedarf zur Überdeckung des Suchbereichs | $Tg_{es}$ | = | $N_\varphi \times N_p \times \Delta T$ |
| Pulslänge | $\Delta t$ | | |
| Bandbreite des Einzelpulses | $\Delta f$ | | |
| Eindeutig erfassbare Zielgeschwindigkeit | $V_{max}$ | = | $\lambda/(4\Delta T)$ |
| Zeit der Zielbeleuchtung | $t_{ges}$ | = | $N_p \times \Delta t$ |
| Trägergeschwindigkeit | v | | |
| Zurückgelegter Weg während eines Pulszuges | L | = | $v \times (N_p - 1) \times \Delta T$ |
| Antennenlänge | 1 | | |
| Keulenbreite bei voller Ausnutzung der Antennenlänge | $\delta\varphi$ | = | $\lambda/1$ |
| Dutycycle | duty | = | $\Delta t/\Delta T$ |

4. Zur Erzielung eines vorgegebenen Signal-zu-Rausch-Verhältnisses darf die Beleuchtungszeit eines Zieles eine gewisse Mindestzeit nicht unterschreiten, so dass man bei Verwendung von $N_p$ Einzelpulsen erhält: $t_{ges} = N_p \times \Delta t \geq t_{min}$.

5. Die minimale Entfernung $R_{min}$ ist durch die Pulslänge beschränkt ("Totzeit"): $R_{min} \geq \Delta t\, c/2$.

6. Zur Wirksamkeit des STAP-Algorithmus muss der während eines Pulszuges zurückgelegte Weg ein Vielfaches der Antennenapertur betragen: $L = v \times (N_p - 1) \times \Delta T \geq C \times 1$, wobei C etwa den Wert 2 bis 10 haben sollte [4].

Insgesamt sind zum Absuchen des vorgegebenen Bereichs $N_p * N_\varphi$ Impulse erforderlich, so dass eine Gesamtzeit $T_{ges} = N_p * N_\varphi * \Delta T$ für die Suche benötigt wird. Dabei wird ein Dutycycle von duty $= \Delta t/\Delta T$ erreicht.

Tabelle 2: Beispiel für eine gültige Parameterwahl für konventionelles Verfahren

| $R_{max}$ | 100 km | $\Delta T$ | 700 usec |
|---|---|---|---|
| $R_{min}$ | 20 km | $N_p$ | 101 |
| $\varphi_{min}, \varphi_{max}$ | *-π/4, π/4* | $t_{ges}$ | 3,36 msec |
| A | 7540 km$^2$ | V | 300 m/sec |
| $\lambda$ | 0,03 m | L | 21 m |
| 1 | 3m | L/v | 70 msec |
| $\delta\varphi = \Delta\varphi$ | 0,01 rad | $T_{ges}$ | 11,1 sec |
| $N_\varphi$ | 157 | Duty | 4,8 % |
| $\Delta t$ | 33,3 usec | **Suchleistung** | **679 km$^2$/sec** |

**b) Zeitbedingungen für das erfindungsgemäße Verfahren**

Gegenüber dem konventionellen Verfahren ändern sich die folgenden Beziehungen:

1. Wie aus Figur 4 zu entnehmen, begrenzt die letzte Frequenz die minimale Radarperiode für eindeutige Abtastung:

$\Delta T \geq 2 * R_{max}/c + K\Delta t$.

2. Weiterhin verschiebt sich für die erste Frequenz der Totbereich: $R_{min} \geq K\Delta t\, c/2$.

3. Der Dutycycle wird um den Faktor K erhöht: duty = K $\Delta t/\Delta T$. Da bei modernen Phased-Array-Systemen durchweg Transistoren zur Leistungserzeugung eingesetzt werden, bei denen die Begrenzung durch die Spitzenleistung gegeben ist und nicht durch die mittlere Leistung, bringt die Erhöhung des Dutycycles kein prinzipielles technisches Problem mit sich.

Die restlichen Formeln bleiben erhalten. Unter diesen Randbedingungen ändern sich die Zahlen für das Beispiel der Auslegung eines MTI-Systemes, wie Tabelle 3 festgehalten. Die Suchleistung wie auch der Dutycycle haben sich vervierfacht.

Tabelle 3: Beispiel für die Steigerung der Suchleistung durch das erfindungsgemäße Verfahren

| K | 4 | | |
|---|---|---|---|
| $R_{max}$ | 100km | $\Delta T$ | 700 usec |
| $R_{min}$ | 20 km | $N_p$ | 101 |
| $\varphi_{min}$ , $\varphi_{max}$ | $-\pi/4$, $\pi/4$ | $t_{ges}$ | 3,36 msec |
| A | 7540 km$^2$ | V | 300 m/sec |
| $\lambda$ | 0,03 m | L | 21 m |
| 1 | 3 m | L/v | 70 msec |
| $\delta\varphi = \Delta\varphi$ | 0,01 rad | $T_{ges}$ | 11,1 sec |
| $N_\varphi$ | 157 | Duty | 19,0 % |
| $\Delta t$ | 33,3 usec | **Suchleistung** | **2716 km$^2$/sec** |

**In der Anmeldung zitierte Literatur zum Stand der Technik**

[1] Stimson, G.W.: Introduction to airborne Radar, Scitech publishing, Inc. Mendham, New Jersey, 1998, ISBN 1-891121-01-4

[2] Klemm, R.: Space-time adaptive processing - principles and applications. IEE Radar, Sonar, Navigation and Avionics Series 9, 1998, ISBN 0 85296 946 5

[3] Sabatini, S., Tarantino, M.: Multifunction Array Radar - System Design and Analysis, Artech House 1994, ISBN 0-89006-726-0

[4] Ender, J.: Signal Processing for multi channel SAR applied to the experimental SAR system 'AER', Internationale Radarkonferenz, Paris Mai 1994

**Anhang: Beschreibung des STAP-Verfahrens**

Durch die Eigenbewegung der Plattform weisen die Echos bodenfester Ziele eine Dopplerverschiebung auf, die sich proportional zur jeweiligen radialen Komponente der Relativgeschwindigkeit verhält. Diese ist vom Winkel zur Bewegungsachse abhängig, so dass sich die Punkte gleicher Dopplerverschiebung auf dem Mantel eines Kegels befinden, dessen Achse in Flugrichtung liegt.

Die Gesamtheit der Bodenechos prägt sich damit im Dopplerbereich als aufgeweitetes Clutterspektrum aus, dessen Form durch die Zweiwegecharakteristik der Antenne bestimmt wird. Die Dopplerfrequenz langsam bewegter Ziele liegt in der Regel innerhalb des Hauptkeulenanteils des Clutterspektrums, so dass eine Trennung allein über die Dopplerfrequenz wie bei bodengebundenen Radaren nicht möglich ist.

Abhilfe bringt das STAP-Verfahren: Werden mehrere Subaperturen benutzt, die längs der Flugrichtung versetzt sind, so wird das vom Boden zurückgeworfene Wellenfeld durch die einzelnen Subaperturen zeitversetzt abgetastet, die Signale in den einzelnen Kanälen unterscheiden sich im Idealfall nur durch diesen Zeitversatz. Bewegte Ziele mit einer radialen Geschwindigkeitskomponente ändern jedoch innerhalb dieser Zeitspanne ihren Abstand zu Sensor, so dass die Signale eine Phasendrehung erleiden und von den Cluttersignalen unterschieden werden können.

In der algorithmischen Realisierung werden die Abtastwerte der K Subaperturen über eine Anzahl $N_p$ von Pulsen zu einem $K*N_p$- dimensionalen *Raum-Zeit-Vektor* **W** zusammengefasst. Die oben beschriebene Redundanz äußert sich in der $K*N_p$ x $K*N_p$ Kovarianzmatrix $\mathbf{R}_w$ = E [$\mathbf{WW}^H$] (E[.] bezeichnet den Erwartungswert, $\mathbf{W}^H$ den transponierten konjugiert komplexen Vektor). Hohe Korrelationen zwischen Abtastwerten unterschiedlicher Subaperturen zu unterschiedlichen Pulsen bewirken, dass eine Anwendung der inversen Kovarianzmatrix auf Raum-Zeit-Vektoren in der Lage ist, Clutterechos zu unterdrücken.

Das Signal eines Bewegtziels aus einer bestimmten Richtung φ mit einer bestimmten Dopplerfrequenz F kann ebenfalls in der Raum-Zeit-Notation modelliert werden als komplexer $K*N_p$-dimensionaler Vektor s(φ, F). Optimal zur Entdeckung eines Anteils **s**(φ, F) ist die Anwendung des Gewichtsvektors **g**(φ, F) = $\mathbf{R}_w^{-1}$ **S**(φ, **F**).
Eine geeignete technische Realisierung für unbekannte Dopplerfrequenz ist der Aufbau einer M x $K*N_p$ Filtermatrix

$$F = \begin{pmatrix} \mathbf{g}^H(\varphi_0, F_1) \\ ... \\ \mathbf{g}^H(\varphi_0, F_M) \end{pmatrix}$$

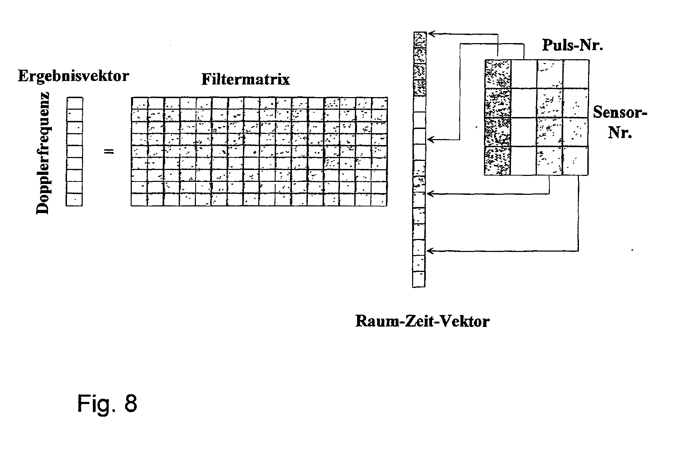

für M verschiedene Dopplerfrequenzen und die Blickrichtung $\varphi_0$ Figur 8 zeigt die Anordnung der Daten in einem Raum-Zeit-Vektor und die Anwendung der oben beschriebenen Filtermatrix. Das Ergebnis ist so zu handhaben wie das Resultat einer gewöhnlichen Dopplerfilterbank.

Da die Kovarianzmatrix $\mathbf{R}_w$ in der Regel nicht bekannt ist, muss sie aus einer Anzahl von Stichproben $\mathbf{W}^{(r)}$, r=1 ,...,R geschätzt werden gemäß:

$$\hat{\mathbf{R}}_W = \frac{1}{R} \sum_{r=1}^{R} \mathbf{W}^{(r)} \mathbf{W}^{(r)H}$$

Die Stichproben können den verschiedenen Entfernungszellen entnommen werden.

**Patentansprüche**

1. Verfahren für ein multiples RADAR, bei dem in direkter Abfolge K Sendekeulen mit verschiedenen Mittenfrequenzen in verschiedene Richtungen abgestrahlt werden, deren Echos in einer nachfolgenden Empfangsphase mit K Subaperturen empfangen und für jede Subapertur in zugeordneten Empfangskanälen aufbereitet und ausgewertet wird, **gekennzeichnet durch** die Verfahrensschritte:

a) die Auswahl einer ersten Sendekeulenrichtung $\varphi_1$ und das Festlegen der Sendeparameter,
b) Aussenden eines Pulses bestimmter Länge Δt und der Bandbreite Δf, bei einer Mittenfrequenz $f_1$,
c) Einstellen einer nächsten Sendekeulenrichtung $\varphi_2 = \varphi_1 + \Delta\varphi$ und weiterer Sendekeulenrichtungen,
d) Aussenden des nächsten Pulses und weiterer Pulse bis zur K-ten Richtung, mit den jeweils Verfahrensschritt b) entsprechenden Parametern,
e) Fokussierung der Antennenelemente auf den Mittelwert der Senderichtungen,
f) Einschalten eines Empfängerarrays mit K Subaperturen, dessen Empfangsbandbreite und Abtastrate mindestens KΔf aufweist, wobei die Empfangskeulenbreite jeder Subapertur KΔφ beträgt,
g) digitale Aufbereitung und Speicherung der empfangenen Daten,
h) die nachfolgend einer Fouriertransformation längs der Entfernungsachse unterzogen werden, so dass die Echos der einzelnen Sendepulse in nicht überlappenden Frequenzbändern gesammelt, während einer Pulskompression durch Multiplikation mit der jeweiligen Referenzfunktion, die auf die entsprechenden Frequenzbänder konzentriert sind, und der Anwendung einer inversen FFT, voneinander trennbar vorliegen,
i) die so erhaltenen entfernungskomprimierten Daten über mehrere Pulse hinweg gesammelt, separat einer adaptiven Raum-Zeit-Verarbeitung unterzogen werden.

**2.** Verfahren nach Anspruch 1,
**dadurch gekennzeichnet,**
**dass** die Reihenfolge der ausgesendeten Sendekeulen so wechselt, dass für jedes einzelne Richtung-Frequenzpaar die Pulswiederholintervalle nicht mehr äquidistant sind.

**3.** Verfahren nach Anspruch 1,
**dadurch gekennzeichnet,**
**dass** die Sendekeulen verschachtelt gesendet werden und die entstehenden Lücken im Empfangsbereich durch Aussendung weiterer Pulszüge mit anderen Pulswiederholfrequenzen geschlossen werden.

**4.** Einrichtung zur Durchführung des Verfahrens nach einem der Ansprüche 1 bis 3, mit einem Generator für mehrere unterschiedliche, in Folge erzeugte Hochfrequenzsignale, einer Sendeantenne mit mehreren Anschlüssen und Empfangseinrichtungen mit einer angeschlossenen Signalverarbeitung,
**gekennzeichnet durch**,
eine phasengesteuerte Gruppenantenne, die Sende-Empfangs-Module aufweist, die in der Lage sind, K-Sendepulse der Länge $\Delta t$ unmittelbar hintereinander bei verschiedenen Mittenfrequenzen an die Strahlerelemente abzugeben und zwischen den Pulsen die Senderichtung umzuschalten, wobei die Antenne mit K parallelen Empfangskanälen ausgerüstet ist, die an K aneinanderstoßende Subaperturen angeschlossen sind und die zur Signalverarbeitung entsprechend des Verfahrens nach einem der Ansprüche 1 bis 3 eingerichtet sind.

## Claims

**1.** Method for a multiple RADAR, in which K transmission lobes with different mid-frequencies are transmitted in a direct sequence in different directions, their echoes are received in a subsequent reception phase with K subapertures and are processed and evaluated for each subaperture in associated reception channels,
**characterized by** the following method steps:

a) the selection of a first transmission lobe direction $\varphi_1$ and the definition of the transmission parameters,
b) transmission of a pulse of specific length $\Delta t$ and of bandwidth $\Delta f$, at a mid-frequency $f_1$,
c) selection of a next transmission lobe direction $\varphi_2 = \varphi_1 + \Delta\varphi$ and of further transmission lobe directions,
d) transmission of the next pulse and of further pulses up to the K-th direction, using the respective parameters corresponding to method step b),
e) focusing of the antenna elements on the mean value of the transmission directions,
f) switching-on of a receiver array with K subapertures, whose reception bandwidth and sampling rate have at least $K\Delta f$, where the reception lobe width of each subaperture is $K\Delta\varphi$,
g) digital processing and storage of the received data,
h) which data is then subjected to Fourier transformation along the range axis, such that the echoes of the individual transmission pulses occur such that they can be separated from one another, collected in frequency bands which do not overlap, during pulse compression by multiplication by the respective reference function, which echoes are concentrated on the corresponding frequency bands, and the use of an inverse FFT,
i) the range-compressed data obtained in this way is collected over a plurality of pulses and separately subjected to adaptive space-time processing.

**2.** Method according to Claim 1,
**characterized**
**in that** the sequence of the transmitted transmission lobes changes such that the pulse repetition intervals are no longer equidistant for each individual direction-frequency pair.

**3.** Method according to Claim 1,
**characterized**
**in that** the transmission lobes are transmitted interleaved and the resultant gaps in the reception area are closed by transmission of further pulse trains using different pulse repetition frequencies.

**4.** Device for carrying out the method according to one of Claims 1 to 3, having a generator for a plurality of different radio-frequency signals produced in sequence, having a transmitting antenna with a plurality of connections and receiving devices with connected signal processing,
**characterized by**

a phase-controlled antenna array which has transmitting/receiving modules which are able to emit K transmission pulses of length $\Delta t$ immediately successively at different mid-frequencies to the antenna elements, and to switch transmission direction between the pulses, with the antenna being equipped with K parallel reception channels which are connected to K mutually abutting subapertures, and which are designed for signal processing based on the method according to one of Claims 1 to 3.

**Revendications**

1. Procédé pour un RADAR multiple, dans lequel, en séquence directe, K lobes de rayonnement, avec différentes fréquences de repos sont émis dans différentes directions, dont les échos sont réceptionnés dans une phase de réception consécutive avec K sous-ouvertures et sont traités et évalués pour chaque sous-ouverture dans des canaux de réception associés,
   **caractérisé par** les étapes de procédé :

   a) la sélection d'une première direction de lobe de rayonnement $\varphi_1$ et la détermination des paramètres d'émission,
   b) l'émission d'une impulsion de longueur définie $\Delta t$ et de la bande passante $\Delta f$, à une fréquence de repos $f_1$,
   c) le réglage d'une prochaine direction de lobe de rayonnement $\varphi_2 = \varphi_1 + \Delta \varphi$ et d' autres directions de lobe de rayonnement,
   d) l'émission de la prochaine impulsion et d'autres impulsions jusqu'à la $K^{\text{ème}}$ direction, avec chaque fois les paramètres correspondant à l'étape de procédé b),
   e) la focalisation des éléments d'antenne sur la valeur moyenne des directions d'émission,
   f) la mise en route d'un système récepteur avec K sous-ouvertures, dont la bande passante de réception et le taux de balayage présentent au moins $K\Delta f$, 1a largeur de lobe de rayonnement de chaque sous-ouverture étant de $K\Delta \varphi$,
   g) le traitement numérique et la mise en mémoire des données réceptionnées,
   h) lesdites données réceptionnées sont ensuite soumises à une transformation de Fourier le long de l'axe d'éloignement, de sorte que les échos des impulsions émettrices individuelles se produisent de façon à ce qu'ils puissent être séparés les uns des autres, collectés dans des bandes de fréquences non chevauchantes, pendant une compression d'impulsions par multiplication par la fonction de référence concernée, lesdits échos étant concentrés sur les bandes de fréquences correspondantes et par l'application d'une transformation de Fourier inverse,
   i) les données compressées par éloignement obtenues de cette manière et collectées sur plusieurs impulsions sont soumises séparément à un traitement adaptatif espace-temps.

2. Procédé selon la revendication 1, **caractérisé en ce que**,
   a séquence des lobes de rayonnement émis varie de sorte que pour chaque paire individuelle fréquence-direction, les intervalles de répétition d'impulsions ne soient plus équidistantes.

3. Procédé selon la revendication 1, **caractérisé en ce que**,
   les lobes de rayonnement sont émis sous forme entrelacée et **en ce que** les interstices naissants dans la zone desservie sont fermés par émission de trains d'impulsions supplémentaires avec d'autres fréquences de répétition d'impulsions.

4. Dispositif pour la réalisation du procédé selon l'une quelconque des revendications 1 à 3, avec un générateur pour plusieurs signaux haute fréquence différents générés successivement, une antenne émettrice avec plusieurs branchements et des dispositifs récepteurs avec un traitement des signaux raccordé,
   **caractérisé par**
   une antenne de groupe pilotée en phases qui comporte des modules émetteurs/récepteurs, qui sont en mesure de restituer aux éléments de rayonnement K impulsions émettrices de la longueur $\Delta t$, directement à différentes fréquences de repos et d'inverser la direction d'émission entre les impulsions, l'antenne étant équipée de K canaux récepteurs parallèles, qui sont branchés sur K sous-ouvertures contiguës et qui sont aménagés pour le traitement des signaux en fonction du procédé selon l'une quelconque des revendications 1 à 3.

Fig. 1

Fig. 2

Fig. 3

Fig. 4

Entfernungsbereich ──────→          Frequenzbereich ──────→

x Ref 1 | x Ref 2 | x Ref 3 | x Ref 4

Entfernungskomprimierte
Daten für Keule 1

Entfernungskomprimierte
Daten für Keule 2

Entfernungskomprimierte
Daten für Keule 3

Entfernungskomprimierte
Daten für Keule 4

# Fig. 5

Fig. 6

Fig. 7

**Fig. 8**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0132378 B1

**In der Beschreibung aufgeführte Nicht-Patentliteratur**

- **Stimson, G.W.** Introduction to airborne Radar. Scitech publishing, Inc. Mendham, 1998
- **Klemm, R.** Space-time adaptive processing - principles and applications. *IEE Radar, Sonar, Navigation and Avionics Series 9,* 1998, ISBN 0 85296 946 5
- **Sabatini, S. ; Tarantino, M.** Multifunction Array Radar - System Design and Analysis. Artech House, 1994
- **Ender, J.** *Signal Processing for multi channel SAR applied to the experimental SAR system 'AER', Internationale Radarkonferenz,* Mai 1994